# EUROPEAN PATENT APPLICATION

(11) **EP 2 747 487 A1**
(43) Date of publication of application: **25.06.2014**
(21) Application number: 12823608.0
(22) Date of filing: 22.06.2012
(51) Int. Cl.: H04W 48/12, H04W 48/18, H04W 76/02

(54) **METHOD FOR MOBILE COMMUNICATION AND MOBILE CONTROL NODE**

(30) Priority: 15.08.2011 JP 2011177654
(71) Applicant: NTT Docomo, Inc., Tokyo 100-6150 (JP)
(72) Inventor: KOSHIMIZU, Takashi, Tokyo 100-6150 (JP); TANAKA, Itsuma, Tokyo 100-6150 (JP)
(74) Representative: HOFFMANN EITLE
(86) International application number: PCT/JP2012/065974
(87) International publication number: WO 2013/024625

(57) **Abstract**

A mobile station UE chooses an appropriate domain for originating AV communication without causing connection delay even when roaming. A mobile communication method according to the present invention includes the steps of: causing a mobility management node MME in an LTE network to send a mobile station UE "ATTACH ACCEPT" containing AV communication provision capability information indicating a capability of providing AV communication in the LTE network; and causing the mobile station UE to determine, based on the AV communication provision capability information, whether to perform the AV communication via an IMS or to perform the AV communication by circuit switching communication.

## Description

### TECHNICAL FIELD

The present invention relates to a mobile communication method and a mobility management node.

### BACKGROUND ART

For the LTE (Long Term Evolution) scheme defined by 3GPP, specified is a method for providing a mobile station UE with AV (Audio & Video) communication (video phone) via an IMS (IP multimedia Subsystem, a service control network in a PS (Packet Switching) domain.

For the LTE scheme, also specified is a method for providing the mobile station UE with AV communication (TV phone) by use of CSFB (CS Fallback) in a CS (Circuit Switching) domain (see, for example, Non-patent document 1).

In this regard, in a mobile communication system employing the LTE scheme, if AV communication can be provided in both of the PS domain and the CS domain, a domain for originating the AV communication has to be chosen in consideration of the settings of the mobile station UE and network configurations. At present, standard specifications of 3GPP do not specify any method for choosing an originating domain.

In view of such circumstances, the following two methods are conceivable as a method for choosing a domain originating AV communication.

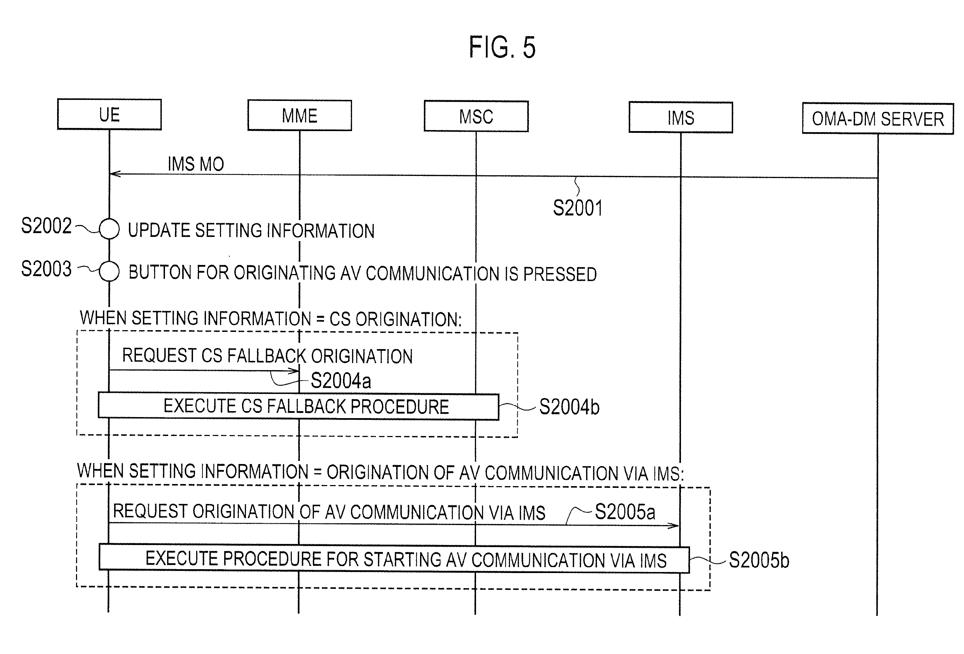

In a first one of the conceivable methods, "IMS MO (Management Object)" is used to give the mobile station UE AV communication provision capability information indicating whether or not AV communication can be provided via the IMS. This method is described briefly below with reference to Fig. 5.

As shown in Fig. 5, in Step S2001, by use of "IMS MO," an OMA-DM (Device Management) server notifies the mobile station UE of AV communication provision capability information indicating whether or not AV communication can be provided via the IMS.

In Step S2002, based on the AV communication provision capability information, the mobile station UE updates its setting information which indicates whether AV communication should be originated via the IMS or in the CS domain.

If a button for originating AV communication is pressed on the mobile station UE in Step S2003 with the setting information set such that the AV communication should be originated in the CS domain, the mobile station UE sends a CSFB start request signal to a mobility management node MME (Mobility Management Entity) in Step S2004a, and a CSFB procedure is executed in Step S2004b. The AV communication in the CS domain is thus started.

If, on the other hand, the button for originating AV communication is pressed on the mobile station UE in Step S2003 with the setting information set such that the AV communication should be originated via the IMS, the mobile station UE sends the IMS a signal requesting that AV communication be originated via the IMS in Step S2005a, and a procedure for starting the AV communication via the IMS is executed in Step S2005b. The AV communication via the IMS is thus started.

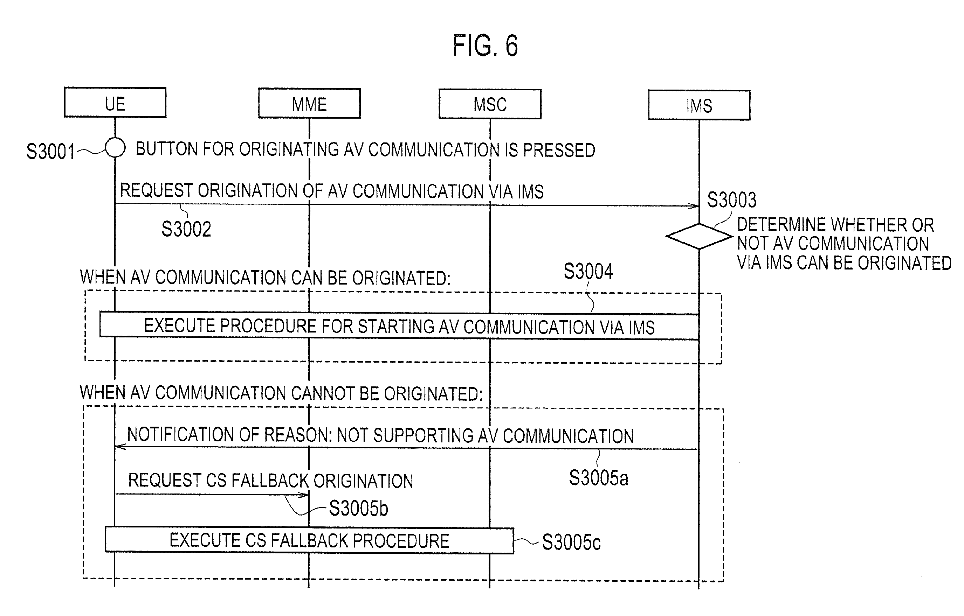

In a second one of the conceivable methods, the mobile station UE tries originating AV communication via the IMS once. This method is described briefly below with reference to Fig. 6.

As shown in Fig. 6, if a button for originating AV communication is pressed on the mobile station UE in Step S3001, the mobile station UE sends the IMS a signal requesting that AV communication be originated via the IMS in Step S3002.

In Step S3003, the IMS determines whether or not the AV communication can be provided via the IMS.

If the IMS determines that the AV communication can be provided via the IMS, a procedure for starting the AV communication via the IMS is executed in Step S3004. The AV communication via the IMS is thus started.

On the other hand, if the IMS determines that the AV communication can be provided via the IMS, the IMS sends the mobile station UE "REJECT" containing a reason indicating that the AV communication cannot be provided, in Step S3005a.

In response to the "REJECT," the mobile station UE sends the mobility management node MME a CSFB start request signal in Step S3005b, and a CSFB procedure is executed in Step S3005c. The AV communication in the CS domain is thus started.

### PRIOR ART DOCUMENT

### NON-PATENT DOCUMENT

Non-patent document 1: 3GPP TS23.272
Non-patent document 2: 3GPP TS24.167

### SUMMARY OF THE INVENTION

However, the OMA-DA server used in the first method is not provided on the assumption that, e.g., the mobile station UE is roaming. In other words, the "IMS MO" sent by the OMA-DM server is provided to notify of the capability of a home network of the mobile station UE.

Thus, this method has a problem that, by use of the "IMS MO," the OMA-DM server cannot notify of the AV communication provision capability information indicating whether or not AV communication via the IMS can be provided in a network of a roaming destination.

Meanwhile, in the second method described above, the mobile station UE is configured to send the IMS a signal requesting that AV communication be originated via the IMS, even when the AV communication via the IMS cannot be provided in an LTE network on which the mobile station UE camps. This is problematic because wasteful origination request signals increase, causing connection delay in origination processing.

Thus, the present invention has been made in view of such circumstances, and has an objective of providing a mobile communication method and a mobility management node which are capable of choosing an appropriate domain for originating AV communication without causing connection delay even when the mobile station UE is roaming.

A first feature of the present invention is summarized as a mobile communication method performed in a mobile communication system including a network of a first communication scheme which is connected to a service control network (IMS) and a network of a second communication scheme which supports circuit switching communication, the method comprising the steps of: causing a mobility management node in the network of the first communication scheme to send a mobile station an Attach response signal containing AV communication provision capability information indicating a capability of providing AV communication in the network of the first communication scheme; and causing the mobile station to determine, based on the AV communication provision capability information, whether to perform the AV communication via the service control network (IMS) or to perform the AV communication by the circuit switching communication.

A second feature of the present invention is summarized as a mobility management node in a network of a first communication scheme in a mobile communication system including the network of the first communication scheme which is connected to a service control network (IMS) and a network of a second communication scheme which supports circuit switching communication, the mobility management node comprising a sending unit configured to send a mobile station an Attach response signal containing AV communication provision capability information indicating a capability of providing AV communication in the network of the first communication scheme.

### BRIEF DESCRIPTION OF THE DRAWINGS

[Fig. 1] Fig. 1 is a diagram showing the overall configuration of a mobile communication system according to a first embodiment of the present invention.
[Fig. 2] Fig. 2 is a functional block diagram of a mobility management node according to the first embodiment of the present invention.
[Fig. 3] Fig. 3 is a diagram showing an example of a format of an information element "EPS network feature support" contained in "Attach Accept" sent by the mobility management node according to the first embodiment of the present invention.
[Fig. 4] Fig. 4 is a sequence diagram showing operation of the mobile communication system according to the first embodiment of the present invention.
[Fig. 5] Fig. 5 is a sequence diagram showing operation of a conventional mobile communication system.
[Fig. 6] Fig. 6 is a sequence diagram showing operation of a conventional mobile communication system.

### MODE FOR CARRYING OUT THE INVENTION

### Mobile Communication System according to the First Embodiment of the Present Invention)

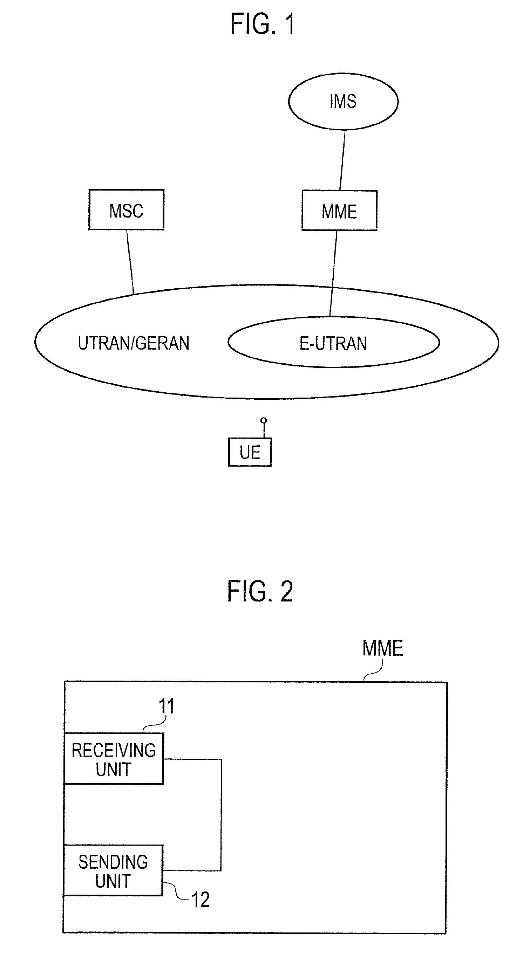

With reference to Figs. 1 to 4, a description is given of a mobile communication system according to a first embodiment of the present invention.

As shown in Fig. 1, the mobile communication system according to this embodiment includes an IMS, an LTE network, and a 3G network.

In the LTE network, a mobile transmission network including a mobility management node MME and an E-UTRAN (Evolved Universal Terrestrial Radio Access Network) are arranged.

In the 3G network, a core network including a circuit switch MSC (Mobile-service Switching Center) and a UTRAN (Universal Terrestrial Radio Access Network)/GERAN (GSM EDGE Radio Access Network) are arranged.

An eNodeB (not shown) is arranged in the E-UTRAN, and a NodeB/BSS (not shown) and an RNC (Radio Network Controller) (not shown) are arranged in the UTRAN/GERAN.

In the IMS, an IMS apparatus such as an SCC AS (Service Centralization and Continuity Application Server) is arranged.

As shown in Fig. 2, the mobility management node MME includes a receiving unit 11 and a sending unit 12.

The receiving unit 11 is configured to receive various signals from the IMS, the E-UTRAN, and a mobile station UE.

For example, the receiving unit 11 is configured to receive "Attach Request (Attach request signal)" from the mobile station UE.

The receiving unit 11 may be configured to receive AV communication provision capability information from the IMS, the information indicating whether AV communication can be provided via the IMS or not.

The sending unit 12 is configured to send various signals to the mobile station UE. For example, the sending unit 12 is configured to send the mobile station UE "Attach Accept" containing the AV communication provision capability information indicating the capability of providing AV communication in the LTE network.

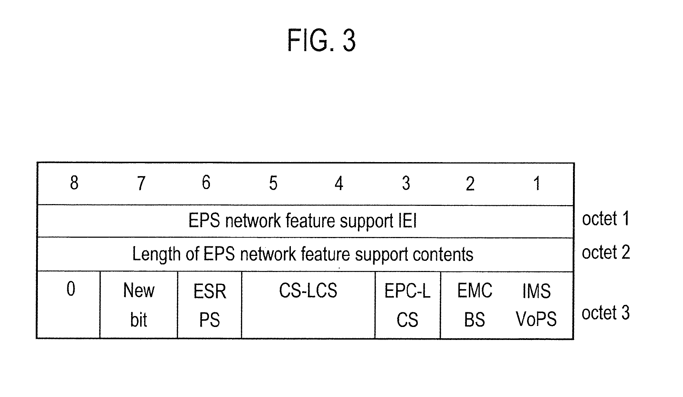

Specifically, as shown in Fig. 3, the sending unit 12 may be configured to set the AV communication provision capability information indicating the capability of providing AV communication in the LTE network, in an information element "New bit" in an information element "EPS network feature support" set in the "Attach Accept."

In this regard, the AV communication provision capability information to be set in the information element "New bit" may be one that indicates whether the AV communication via the IMS can be provided in the LTE scheme or not.

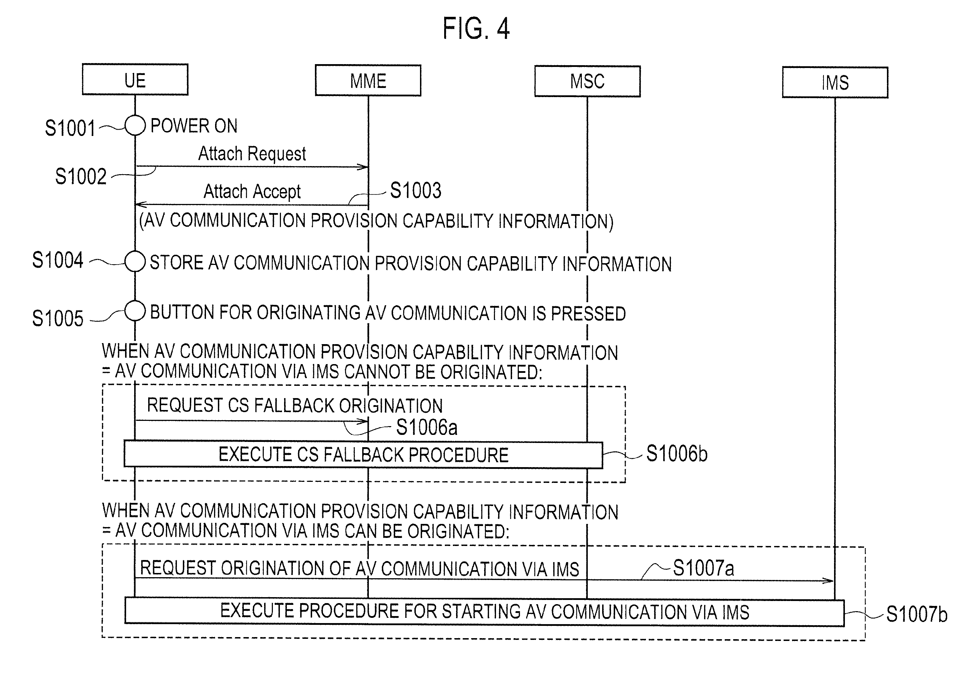

Operation of the mobile communication system according to this embodiment is described below with reference to Fig. 4.

As shown in Fig. 4, once the mobile station UE is powered on in Step S1001, the mobile station UE sends the mobility management node MME "Attach Request" in Step S1002.

In this regard, the mobile station UE sends the mobility management node MME "TA Update" when a currently-located TA (Tracking Area) is changed.

In Step S1003, the mobility management node MME sends the mobile station "Attach Accept" containing the information element "EPS network feature support" in which the above-described AV communication provision capability information is set.

In Step S1004, the mobile station UE stores the AV communication provision capability information thus received.

When a button for originating AV communication is pressed on the mobile station UE in Step S1005 with the AV communication provision capability information set such that the AV communication via the IMS cannot be provided in the LTE network, the mobile station UE sends the mobility management node MME a CSFB start request signal in Step S1006a, and a CSFB procedure is executed in Step S1006b. The AV communication in the CS domain is thus started.

On the other hand, when the button for originating AV communication is pressed on the mobile station UE in Step S1005 with the AV communication provision capability information indicating that the AV communication via the IMS can be provided in the LTE network, the mobile station UE sends the IMS a signal requesting origination of AV communication via the IMS in Step S1007a, and a procedure for staring the AV communication via the IMS is executed. Thus, the AV communication via the IMS is started.

According to the mobile communication system of this embodiment, the "IMS MO" sent by the OMA-DM server is not used, but instead, the mobility management node MME is configured to notify the mobile station UE of the AV communication provision capability information indicating whether the AV communication via the IMS can be provided in the LTE network or not, by use of "Attach Accept." Thus, even when roaming, the mobile station UE can choose an appropriate domain for originating the AV communication, without sending wasteful origination request signals.

Further, according to the mobile communication system according to this embodiment, when the mobile station UE performs Attach processing, the mobility management node MME can surely notify the mobile station UE of the AV communication provision capability information.

Furthermore, according to the mobile communication system according to this embodiment, the mobile station UE can choose an appropriate domain for originating AV communication at any timing when performing Attach processing.

Aspects of this embodiment described above may be represented as follows.

A first feature of the present embodiment is summarized as the mobile communication method performed in the mobile communication system including the network of the LTE scheme (first communication scheme) which is connected to the IMS (service control network) and the network of 3G (second communication scheme) which supports circuit switching communication, the method comprising the steps of: causing the mobility management node MME in the network of the LTE scheme to send a mobile station UE "Attach Accept (Attach response signal)" containing AV communication provision capability information indicating a capability of providing AV communication in the network of the LTE scheme; and causing the mobile station UE to determine, based on the AV communication provision capability information, whether to perform the AV communication via IMS or to perform the AV communication by the circuit switching communication.

A second feature of the present embodiment is summarized as the mobility management node MME in the network of a first communication scheme in a mobile communication system including the network of the LTE scheme and the network of 3G, the mobility management node MME comprising the sending unit 12 configured to send a mobile station "Attach Accept" containing AV communication provision capability information indicating the capability of providing AV communication in the network of the LTE scheme.

It should be noted that the foregoing operations of the mobility management node MME and the mobile station UE may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobility management node MME and the mobile station UE. Otherwise, the storage medium and the processor may be provided as discrete components inside the mobility management node MME and the mobile station UE.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2011-177654 (filed on August 15, 2011) is incorporated by reference in the present specification.

### INDUSTRIAL APPLICABILITY

As described above, the present invention can provide a mobile communication method and a mobility management node which are capable of choosing an appropriate domain for originating AV communication without causing connection delay even when the mobile station UE is roaming.

### EXPLANATION OF THE REFERENCE NUMERALS

- UE: mobile station
- MSC: circuit switch
- MME: mobility management node
- 11: receiving unit
- 12: sending unit

## Claims

1. A mobile communication method performed in a mobile communication system including a network of a first communication scheme which is connected to a service control network and a network of a second communication scheme which supports circuit switching communication, the method comprising the steps of:
causing a mobility management node in the network of the first communication scheme to send a mobile station an Attach response signal containing AV communication provision capability information indicating a capability of providing AV communication in the network of the first communication scheme; and
causing the mobile station to determine, based on the AV communication provision capability information, whether to perform the AV communication via the service control network or to perform the AV communication by the circuit switching communication.

2. A mobility management node in a network of a first communication scheme in a mobile communication system including the network of the first communication scheme which is connected to a service control network and a network of a second communication scheme which supports circuit switching communication,
the mobility management node comprising a sending unit configured to send a mobile station an Attach response signal containing AV communication provision capability information indicating a capability of providing AV communication in the network of the first communication scheme.
